# EUROPEAN PATENT APPLICATION

(11) **EP 2 343 893 A1**
(43) Date of publication of application: **13.07.2011**
(21) Application number: 10197463.2
(22) Date of filing: 31.12.2010
(51) Int. Cl.: H04N 7/18, E21B 47/00

(54) **Camera manipulating device for video inspection system**

(30) Priority: 11.01.2010 US 685232
(71) Applicant: Emerson Electric Co., St. Louis, MO 63136 (US)
(72) Inventor: Babb, Larry, Elyria, OH 44035 (US)
(74) Representative: Hirsch & Associés

(57) **Abstract**

A camera manipulating device (30) for a camera (28) attached to a cable (24) includes a first member (40), a second member (42), and a connecting member (44) disposed therebetween. The first member (40) is attached to the camera (28) so that the camera (28) moves with the first member (40). The second member (42) is rotatably mounted over the cable (24). The camera (28) is movable in a first plane when the connecting member (44) defines an angle relative to the second member (42). The camera (28) is movable in a second plane perpendicular to the first plane when the second member (42) is rotated around the cable (24).

## Description

### FIELD

The present disclosure relates to video inspection systems, and more particularly to camera manipulating devices for video inspection systems.

### BACKGROUND

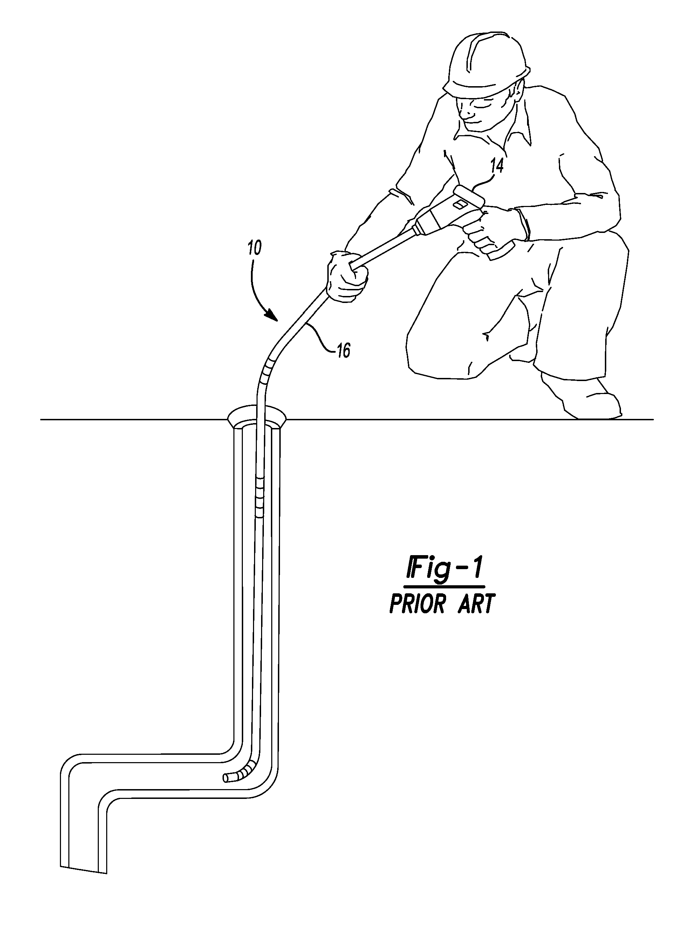

Video inspection systems including cameras attached to cables may be used to inspect hard-to-reach areas or tight spots for defects and/or obstructions. Referring to FIG. 1, a typical video inspection system 10 may include a camera 12, a display 14, and a cable 16. The camera 12 is mounted to an end of the cable 16 and has a small size to be inserted into an object to be inspected, such as long pipes, conduits, drain pipes, and engines. As the cable 16 is inserted, the camera 12 takes inside images of the object. The cable 16 transmits video signals from the camera 12 to the display 14 which displays the inside images.

Generally speaking, the camera 12 is positioned at the end of the cable 16 in a fixed orientation so that its field of view relative to the cable 16 does not change. In most instances, the cable 16 is deployed in an object to be inspected in a linear manner such that the camera 12 takes images from the end of the cable 16 in a direction along the cable's 16 longitudinal axis. However, because the cable 16 is deflectable, the orientation of the end portion of the cable 16 may be manipulated, as desired, so that the field of view of the camera 12 can be reoriented relative to the longitudinal axis of the cable 16 in order to take images laterally to the longitudinal axis of the cable 16, as shown, for example, in FIG. 1.

Generally, a user does not know inside conditions of the object, nor a desired angle of the camera 12. When the user identifies a spot of interest, the user may need to remove the camera 12 and the cable 16 out of the object to adjust the angle of the camera 12. After the adjustment, the user inserts the camera 12 into the object and locate the spot of interest again. Since the angle of the camera 12 is not adjusted adjacent to the spot of interest, another angle adjustment may be needed. Therefore, adjusting the angle of the camera unnecessarily burdens the inspection work.

### SUMMARY

A camera manipulating device for a camera attached to a cable includes a first member and a second member. The first member is attached to the camera so that the camera moves with the first member. The second member is rotatably mounted over the cable. A first angle of the camera relative to the second member is adjusted by changing an angle of the first member relative to the second member.

In other features, a second angle of the camera relative to the camera manipulating device is adjusted by rotating the second member around the cable. The camera manipulating device further includes a connecting member between the first member and the second member. The connecting member may be one of a universal joint, a flexible joint, a coiled spring, and a set of rigid pipe joints.

A camera manipulating device for manipulating a camera attached to a cable includes a first sleeve, a second sleeve and a connecting member. The first sleeve is secured over the camera. The second sleeve is rotatably mounted over at least a portion of the cable. The connecting member is connected between the first sleeve and the second sleeve. The connecting member is selected from a group consisting of a universal joint, a flexible joint, a coiled spring, and a set of pipe joints. A first angle of the camera is adjusted by changing an angle of the first sleeve relative to the second sleeve in a first plane. A second angle of the camera in a second plane is adjusted by rotating the second sleeve around the cable. The camera defines a circular contour in the second plane and remains in an upright position when the second sleeve is rotated. The second plane is perpendicular to the first plane and a longitudinal axis of the second sleeve.

A video inspection system includes a cable, a camera attached to the cable, and a camera manipulating device. The camera manipulating device is removably mounted over the cable for manipulating the camera to move in a first plane and a second plane perpendicular to the first plane.

This section provides a general summary of the disclosure, and is not a comprehensive disclosure of its full scope or all of its features.

### DRAWINGS

The present invention will become more fully understood from the detailed description and the accompanying drawings, wherein:

FIG. 1 is a perspective view of a typical video inspection system;

FIG. 2 is a video inspection system incorporating a camera manipulating device according to a first embodiment of the present disclosure;

FIG. 3 is a schematic view of a camera manipulating device of FIG. 2;

FIG. 4 is an end view of the camera manipulating device of FIG. 2;

FIG. 5 is a schematic view of a camera manipulating device according to a second embodiment of the present disclosure;

FIG. 6 is a perspective view of a video inspection system incorporating a camera manipulating device according to a third embodiment of the present disclosure;

FIG. 7 is a schematic view of the camera manipulating device of FIG. 6;

FIG. 8 is a schematic view of a camera manipulating device according to a fourth embodiment of the present disclosure;

FIG. 9 is another schematic view of the camera manipulating device of FIG. 8;

FIG. 10 is a perspective view of a video inspection system incorporating a camera manipulating device according to a fifth embodiment of the present disclosure;

FIGs. 11A, 11B, 11C and 11D are perspective views of exemplary camera manipulating devices used in the video inspection system of FIG. 10;

FIG. 12 is a schematic view of the camera manipulating device of FIG. 10;

FIG. 13 is a schematic view of a camera manipulating device according to a sixth embodiment of the present disclosure; and

FIG. 14 is a schematic view of a camera manipulating device according to a seventh embodiment of the present disclosure.

Corresponding reference numerals indicate corresponding parts throughout the several views of the drawings.

### DETAILED DESCRIPTION

First Embodiment

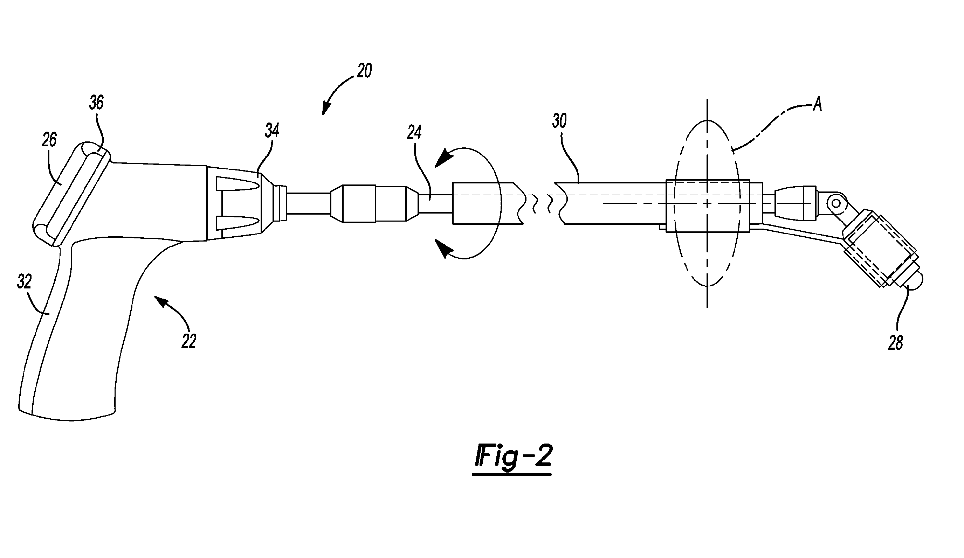

Referring to FIG. 2, a video inspection system 20 according to a first embodiment of the present disclosure includes a display body 22, a cable 24, a display 26, a camera 28, and a camera manipulating device 30. The display body 22 defines a pistol-like configuration and includes a handle portion 32, a front end 34, and a rear end 36. The cable 24 is removably mounted to the front end 34 and the display 26 is mounted at the rear end 36.

The camera 28 is secured to a leading end of the cable 24. The camera 28 has a generally cylindrical shape and has a small diameter to be inserted into most hard-to-reach places, such as drain pipes, engines, heat exchangers, etc. The cable 24 includes electric wires (not shown) for transmitting signals, such as composite NTSC video signals, from the camera 28 to the display 26. Alternatively, the video inspection system 20 may be configured so that the camera 28 may be operable to transmit digital or analog video signals wirelessly to the display 26 which can receive and process the signals for display. The cable 24 may have a coiled outer sheath over the electric wires. The coiled outer sheath is configured to be deflectable or bendable and is not elastic.

For example, the cable 24 may be bent into a circle for easy storage and be straightened during inspection to allow for insertion of the cable 24 into a small hole or space. A leading end of the cable 24 may be bent to define an angle relative to a main body of the cable 24. Therefore, the camera 28 can inspect images laterally of the main body of the cable 24.

The camera manipulating device 30 is mounted over the cable 24 and is connected to the camera 28 for adjusting the orientation of the camera 28 relative to the main body of the cable 24.

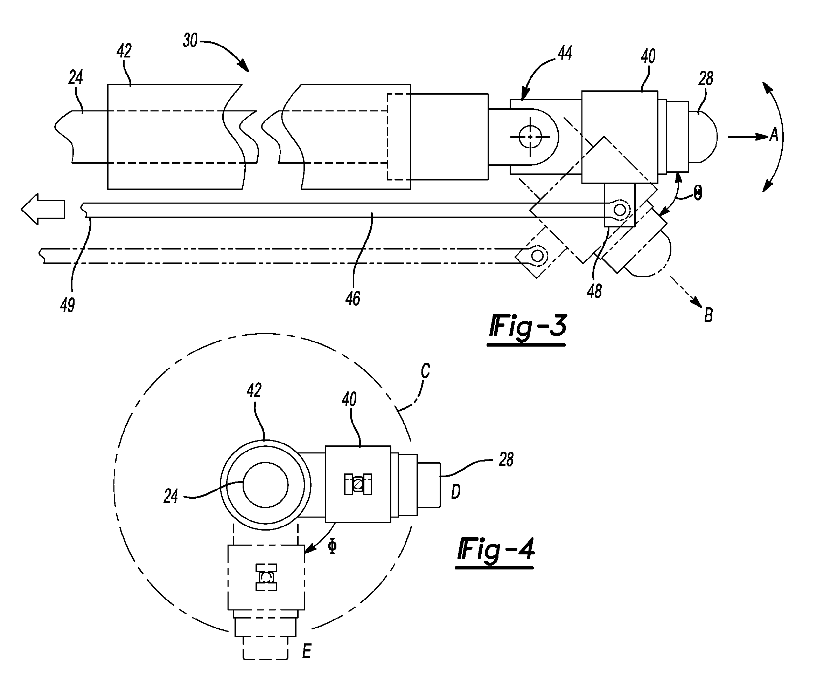

Referring to FIG. 3, the camera manipulating device 30 includes a first sleeve 40, a second sleeve 42, a connecting member 44, and a manipulating member 46. The first sleeve 40 is secured to the camera 28 so that the camera 28 moves with the first sleeve 40. The second sleeve 42 is mounted rotatably over a portion of the cable 24 and can rotate relative to the cable 24 around a central axis of the second sleeve 42. The connecting member 44 may be a flexible joint for flexibly joining the first sleeve 40 to the second sleeve 42. In the present embodiment, the connecting member 44 is a universal joint, which allows the first sleeve 40 to move relative to the second sleeve 42, retaining it at a desired angle θ relative to the second sleeve 42 and preventing the camera 28 to rotate relative to the cable 24.

For example, the first sleeve 40 may be in a first position where the first sleeve 40 is aligned with the second sleeve 42 and the camera 28 faces a first direction A which is parallel to the longitudinal axis of the cable 24 and the longitudinal axis of the second sleeve 42. While the cable 24 can be deflected and bent into any shape, the "longitudinal axis of the cable" as used in the present application refers to the longitudinal axis of the main body of the cable 24 which is directly connected to the display body 22 or the housing of the video inspection system and which is generally straight during inspection.

In the first position, the lenses of the camera 28 is oriented in a direction perpendicular to the longitudinal axis of the cable 24. Therefore, the camera 28 can take images of a plane that is perpendicular to the longitudinal axis of the cable. 24. To take images of a spot that is located laterally of the cable 24, the camera 28 needs to be moved laterally away from the longitudinal axis of the cable 24. The manipulating member 46 includes a connecting end 48 attached to the first sleeve 40 and an operating end 49 located adjacent to the display body 22. By pulling the manipulating member 46, the first sleeve 40 may be moved to a second position away from the longitudinal axis of the cable 24. In the second position, the first sleeve 40 defines an angle θ relative to the second sleeve 42 and the lens of the camera 28 faces a second direction B. By pushing the manipulating member 46, the first sleeve 40 may be moved toward the longitudinal axis of the cable 24 to reduce the angle θ. Therefore, the angle of the camera 28 relative to the longitudinal axis of the cable 24 may be adjusted adjacent to the inspection site without removing the camera 28 out of the inspection site.

The cable 24 may be deflectable and is not elastic. Therefore, after the user manipulates the first sleeve 40 away from the longitudinal axis of the cable 24 to define an angle θ, the leading end of the cable 24 is bent to define an angle θ. The leading end of the cable 24 is maintained at this angle after the user stops applying a force to the manipulating member 46.

Referring to FIG. 4, in addition to manipulating the first sleeve 40 toward or away from the longitudinal axis of the cable 24, the camera manipulating device 30 may be used to manipulate the camera 28 on a second plane C perpendicular to the longitudinal axis of the cable 24 in the first plane. When the first sleeve 40 is at an angle θ relative to the longitudinal axis of the cable 24, the user may rotate the second sleeve 42 over the cable 24. The camera 28 may be moved along the second plane C where the camera 28 is located and which is perpendicular to the longitudinal axis of the cable 24.

For example, a user may take 360° images around the camera 28. When the first sleeve 40 is in a horizontal position D relative to the user, the user may rotate the second sleeve 42 so that the first sleeve 40 is moved away from the horizontal position D to define an angle ϕ. Angle ϕ may range from 0 to 90°. When the second sleeve 42 is rotated, the camera 28 is moved in the second plane C to define a circular contour while the camera 28 remains in the upright position. Therefore, the camera 28 takes only upright images, making the images easily observed by the user.

Second Embodiment

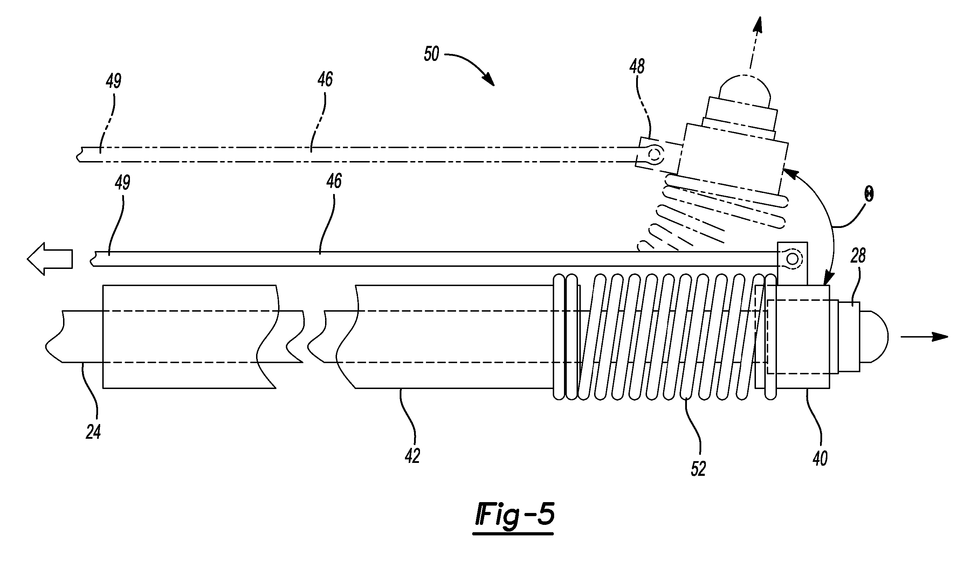

Referring to FIG. 5, a camera manipulating device 50 according to a second embodiment of the present disclosure is similar to that of the first embodiment except for the configuration of the connecting member 52. Like components are indicated by like reference numbers for clarity. The connecting member 52 is a flexible joint in the form of coiled springs. The connecting member 52 may be deflectable and may be either elastic or non-elastic. The first sleeve 40 may define an angle θ relative to the second sleeve 42 when the connecting member 52 is deflected at an angle θ relative to the second sleeve 42. The angle θ may range from 0 to 90 degrees. A manipulating member 46 may be attached so that the user may remotely adjust the angle of the first sleeve 40 and consequently the camera 28 relative to the longitudinal axis of the cable 24.

Similarly, the camera 28 may be moved along a second plane perpendicular to the longitudinal axis of the cable 24 by rotating the second sleeve 42 around the cable 24.

Third Embodiment

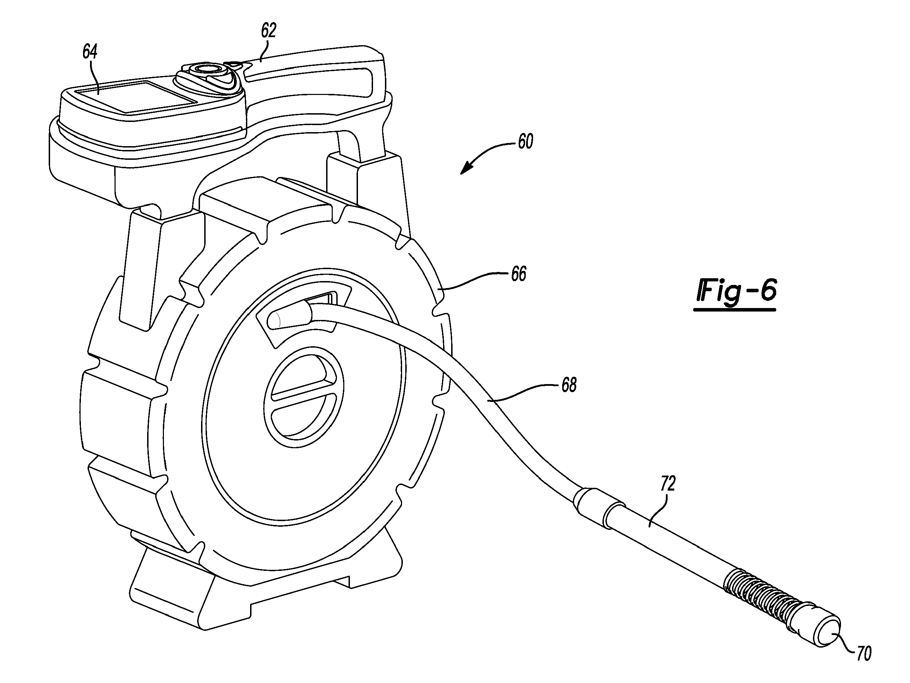

Referring to FIG. 6, a video inspection system 60 according to a third embodiment of the present disclosure includes a display body 62, a display 64, a cable reel 66, a cable 68, a camera 70, and a camera manipulating device 72. The cable 68 has a sufficient length so that the video inspection system 60 can inspect a long or underground pipe. The display 64 is mounted to the display body 62.

The cable 68 is wrapped and received inside the cable reel 66 for easy storage. The cable 68 has a first end attached to the camera 70 and a second end attached to the display 64. Unlike the cable of the first and second embodiments, the cable 68 of this embodiment is made of soft materials and cannot be bent to retain a particular shape without application of force.

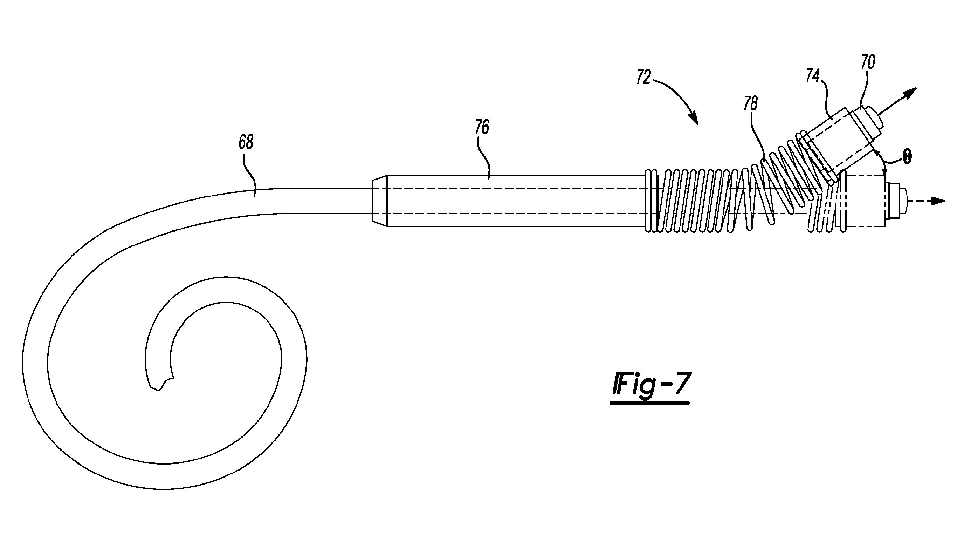

Referring to FIG. 7, the camera manipulating device 72 includes a first sleeve 74, a second sleeve 76, and a connecting member 78 disposed between the first sleeve 74 and the second sleeve 76. The first sleeve 74 is secured over the camera 70 or a leading end of the cable 68 so that the camera 70 can move with the first sleeve 74. The second sleeve 76 is mounted over a portion of the cable 68. The first sleeve 74 and the second sleeve 76 may be made of rigid materials. The connecting member 78 is a flexible joint in the form of coiled springs. The connecting member 78 is deflectable and is not elastic. The connecting member 78 connects the first sleeve 74 to the second sleeve 76 and can be bent or deflected to a desired position to define an angle θ relative to the second sleeve 76. When the connecting member 78 is bent, the cable 68 inside the connecting member 78 is bent and retains the bent position.

Before the camera 70 and the cable 68 are inserted into a hole or space leading to an inspection site, a user may adjust the orientation of the camera 70 relative to the second sleeve 76 and consequently the longitudinal axis of the cable 68 by bending the connecting member 78. Therefore, the video inspection system 60 with a soft cable can take images of a spot that is located laterally from the cable 68.

As in the first and second embodiments, the second sleeve 76 may be rotatably mounted over the cable 68. Therefore, the camera 70 can be moved along a circle on a plane that is perpendicular to the longitudinal axis of the cable 68 and in which the camera 70 is located when the second sleeve 76 is rotated over the cable 68. The camera 70 remains in the upright position to take upright images.

Fourth Embodiment

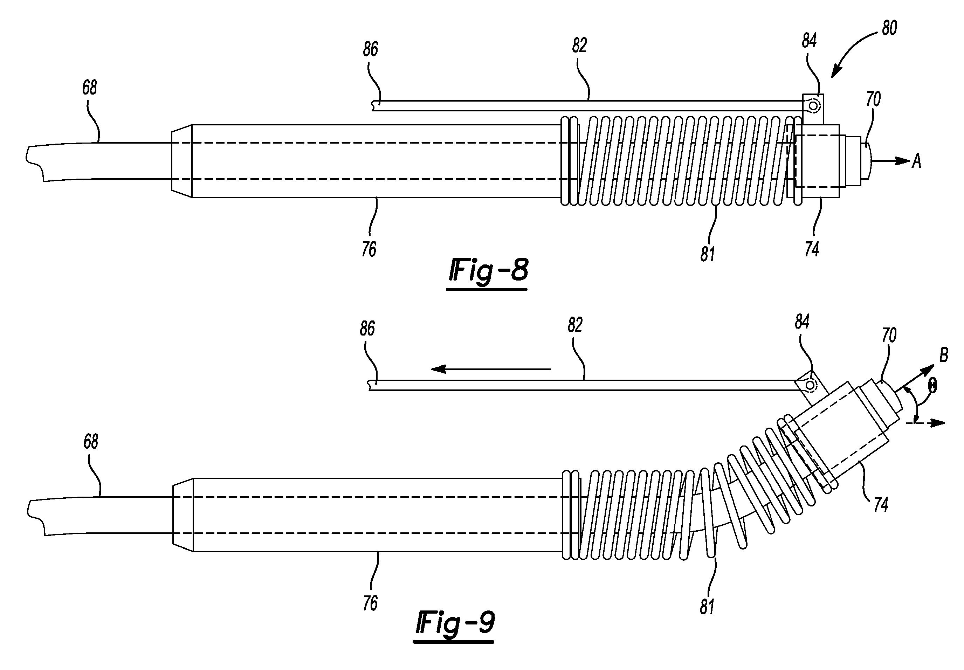

Referring to FIGs. 8 and 9, a camera manipulating device 80 according to a fourth embodiment of the present disclosure is similar to that of the third embodiment. More specifically, the camera manipulating device 80 includes the first sleeve 74, the second sleeve 76, a connecting member 81, and a manipulating member 82. The connecting member 81 is disposed between the first sleeve 74 and the second sleeve 76. The manipulating member 82 is attached to a secured end 84 of the first sleeve 74 for manipulating the orientation of the camera 70. The manipulating member 82 may take the form of a rod that has a sufficient length to enable the user to remotely move the first sleeve 74 relative to the second sleeve 76. By pulling the manipulating member 82 toward the user, the first sleeve 74 is pulled to move from a first position A (FIG. 8) to a second position B (FIG. 9).

The connecting member 81 may be similar to or different from the connecting member 78 of the third embodiment. When the connecting member 81 is similar to the connecting member 78 and is not elastic, the connecting member 81 is maintained in the bent position when a force is not applied. When the connecting member 81 is deflectable and elastic like ordinary coiled springs, the connecting member 81 returns to its original unbent position when a force is not applied.

With the provision of the manipulating member 82 which has a manipulating end 86 reachable by the user during inspection, the user may hold the manipulating member 82 during inspection to maintain the connecting member 78 in the bent position.

The manipulating member 82 may be made of rigid or soft materials depending on the structure of the connecting member 81. When the connecting member 81 is deflectable but not elastic, the manipulating member 82 should be made of a rigid material to be able to push the connecting member 81 back to its original, unbiased position. When the connecting member 81 is deflectable and elastic, the connecting member 81 will return to its unbiased position upon release of force. Therefore, the manipulating member 82 can be made of a soft material.

Fifth Embodiment

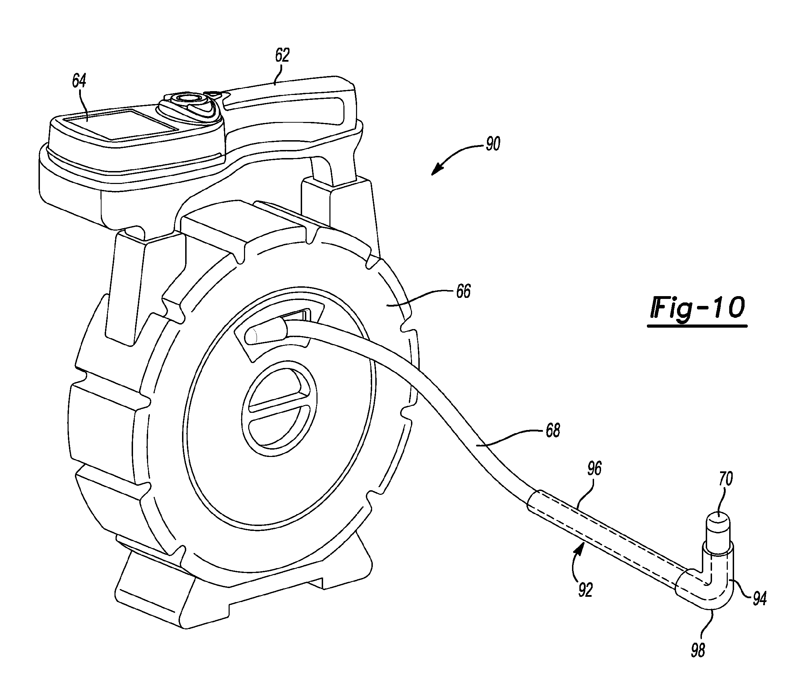

Referring to FIG. 10, a video inspection system 90 according to a fifth embodiment of the present disclosure is similar to that of the fourth embodiment except for the construction of the camera manipulating device 92. Like the video inspection system 60 of the fourth embodiment, the video inspection system 90 of the present embodiment includes a display body 62, a display 64, a cable reel 66, a cable 68, and a camera 70. The camera manipulating device 92 of this embodiment, however, is different in that it is not deflectable.

More specifically, the camera manipulating device 92 defines a sleeve assembly that includes a first sleeve section 94 and a second sleeve section 96 that are joined by an angled connecting member 98. The first sleeve section 94 is attached to the camera 70 or a leading end of the cable 68. The second sleeve section 94 is rotatably mounted over a portion of the cable 68. The connecting member 98 may be selected from a group of several connecting members that each define a different angle. A user may adjust the orientation of the camera 70 relative to the cable 68 by choosing the connecting member 98 with the desired angle. The first sleeve section 94 and the second sleeve section 96 are joined to the connecting member 98 by a threaded connection, a press fit, adhesive, or in another well-known manner.

To attach the camera manipulating device 92, the cable 68 is fed through the second sleeve section 96 through the connecting member 98 to the first sleeve section 94.

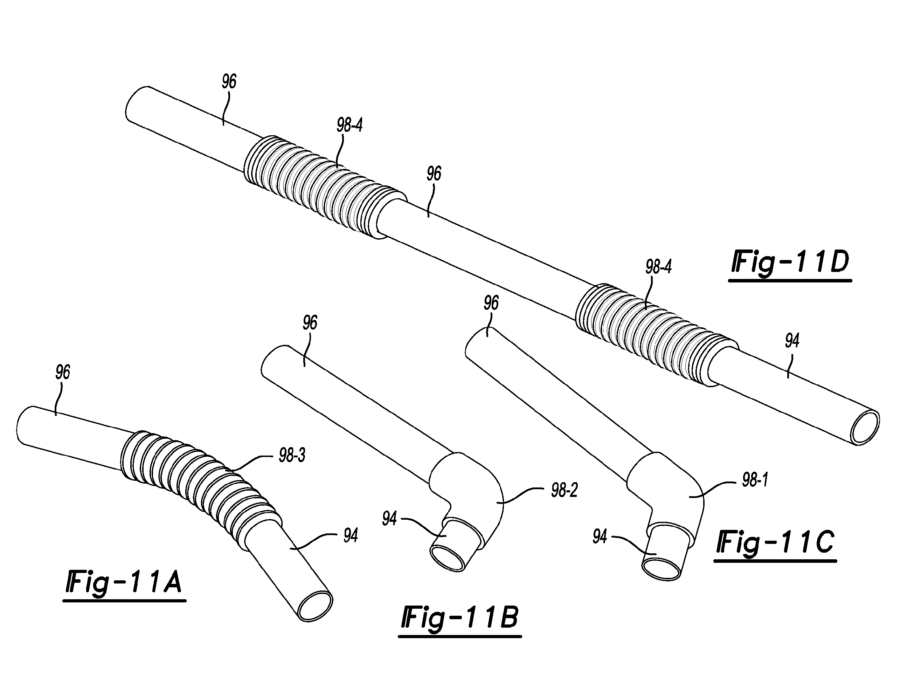

Referring to FIGs. 11A through 11 D, the camera manipulating device 92 may take various forms, differing in the angle of the connecting member 98-1, 98-2, 98-3 and 98-4. For example, the connecting member 98-1 creates an obtuse angle between the first sleeve section 94 and the second sleeve section 96; the connecting member 98-2 creates a right angle; the connecting member 98-3 is a flexible member (e.g., a coil spring) that provides an adjustable angle ; and a plurality of connecting members 98-4 provide greater flexibility in a longer device 92 having multiple first sleeves 96. The angle of the first sleeve section 94 relative to the second sleeve section 96 may be adjusted by choosing a connecting member 98-1, 98-2, 98-3 and 98-4 with a desired angle among a set of connecting members and/or the connecting members 98-3 and 98-4 can vary their respective angle(s).

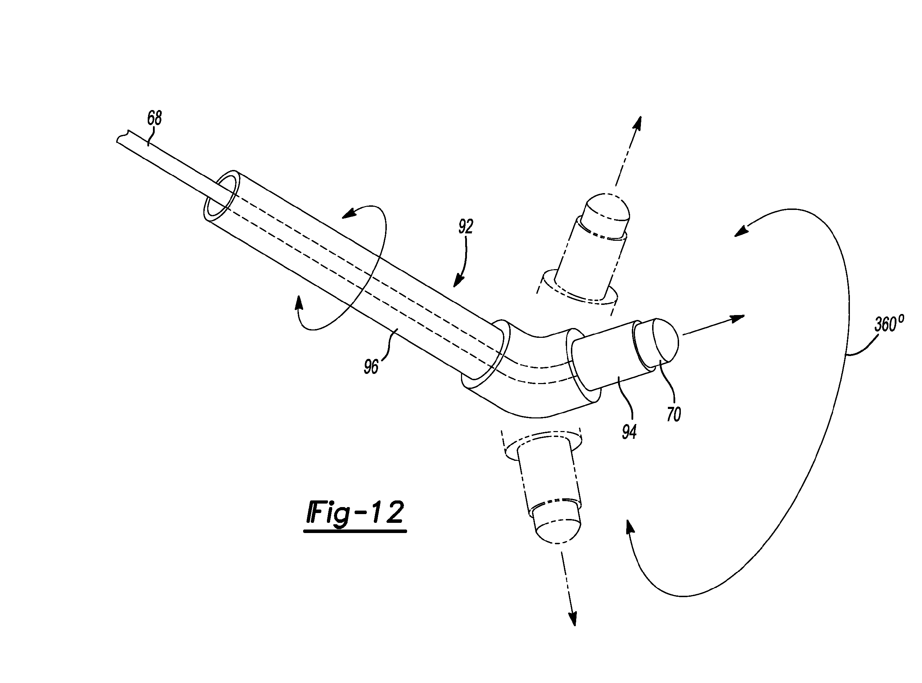

Referring to FIG. 12, during inspection, the camera 70 and camera manipulating device 92 is put in the inspection site which, for example, may be a long pipe. The second sleeve section 96 may have a sufficient length so that a portion of the second sleeve section 96 remains accessible to a user. The camera manipulating device 92 in the form of a sleeve assembly changes the orientation of the camera 70 relative to the longitudinal axis of the cable 68. Once the camera 70 is placed adjacent to the inspection site, a user may rotate the second sleeve section 96 to rotate the camera 70 in a plane perpendicular to the second sleeve section 96. Therefore, the user can acquire images in a 360° field of view relative to the longitudinal axis of the cable 68.

Sixth Embodiment

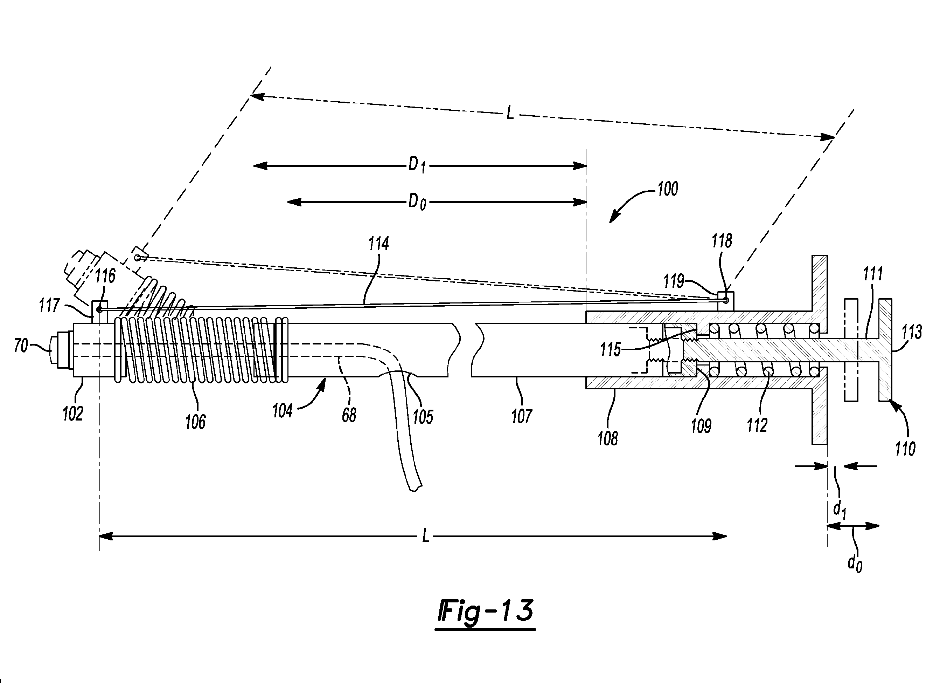

Referring to FIG. 13, a camera manipulating device 100 according to a sixth embodiment of the present disclosure includes a first member 102, a second member 104 and a connecting member 106 disposed between the first member 102 and the second member 104, all of which are aligned in a generally collinear arrangement. The first member 102 defines a sleeve attached to the camera 70 so that the camera 70 can move with the first member 102. The connecting member 106 is flexible and can deflect, but it is biased to a neutral position such that the first member 102 is collinear with the second member 104. While the connecting member 106 is shown as a coil spring in FIG. 13, it is understood and appreciated that the connecting member 106 may be a universal joint, a flexible joint, or any connection that is biased to a neutral position and that can be moved, adjusted, deflected or the like upon the application of a force by the user. The cable 68 is attached to the camera 70 and can pass through the first member 102, the connecting member 106 and at least a portion of the second member 104.

The second member 104 includes a cylindrical portion 107 and a housing 108 telescopically mounted over the cylindrical portion 107. A push rod 110 is connected to the cylindrical portion 107 at one end and extends beyond an end of the housing 108. The push rod 110 comprises a neck portion 111 and a head portion 113. A biasing member 112, for example a spring, is located around the neck 111 and is biased between a shoulder portion 115 of the housing 108 and the head portion 113 of the push rod 110. A connecting line of a fixed length L, such as a cord 114, has a first end 116 that is connected to the first member 102 at a tab portion 117 and a second end 118 that is connected to the housing 108 of the second member 104 at a corresponding tab portion 119. The biasing member 112 biases the second member 104 against the housing 108 along the axis of the cylindrical portion 107 so that a shoulder portion 109 of the cylindrical portion 107 seats against the shoulder portion 115 of the housing 108. When the shoulder portions 109 and 115 are seated, the distance between the tab portions 117 and 119 is substantially equal to the length L of the connecting line 114. In a camera-neutral position (i.e., when the first portion 102 and camera 70 are substantially collinear with the second portion 104), the cylindrical portion 107 extends a distance D₀ from one end of the housing 108 and the push rod 110 extends a distance do from the opposite end of the housing 108.

To manipulate the orientation of the camera 70, a user may depress the push rod 110 toward the housing 108, overcoming the bias of biasing member 112, to cause the push rod 110 to extend a distance d₁ (<d₀) from the housing 108 and the cylindrical portion 107 to extend a distance D₁ (>D₀) from the housing 108. In this state, a force is generated that acts along the connecting line 114. Since the connecting line 114 has a fixed length L and is not elastic, the force in the connecting line 114 overcomes the bias of the connecting member 106 and draws the first member 102 and the camera 70 toward the housing 108. As a result, the longitudinal axis of the first member 102 is angled relative to the longitudinal axis of the cylindrical portion 107 of the second member 104. Once in a desired angular position, the camera 70 may also be rotated by the user by simply rotating the entire camera manipulating device 100.

When the user releases the push rod 110, the biasing member 112 biases the push rod 110 back to its neutral position, the cylindrical portion 107 retracts into the housing 108 and the first member 102 is biased back to collinear alignment with the second member 104 by the bias of the connecting member 106.

It is understood and appreciated that the cable 68 may extend through the entire length or only a portion of the length of the camera manipulating device 100. When the cable 68 extends through only a portion of the length of the camera manipulating device 100, the cable 68 may extend through an opening 105 of the cylindrical portion 107. The opening 105 may have a sufficient size so that when the cylindrical portion 107 is slightly rotated, the cable 68 remains drooping in the opening105 without being wrapping around the cylindrical portion 107.

Seventh Embodiment

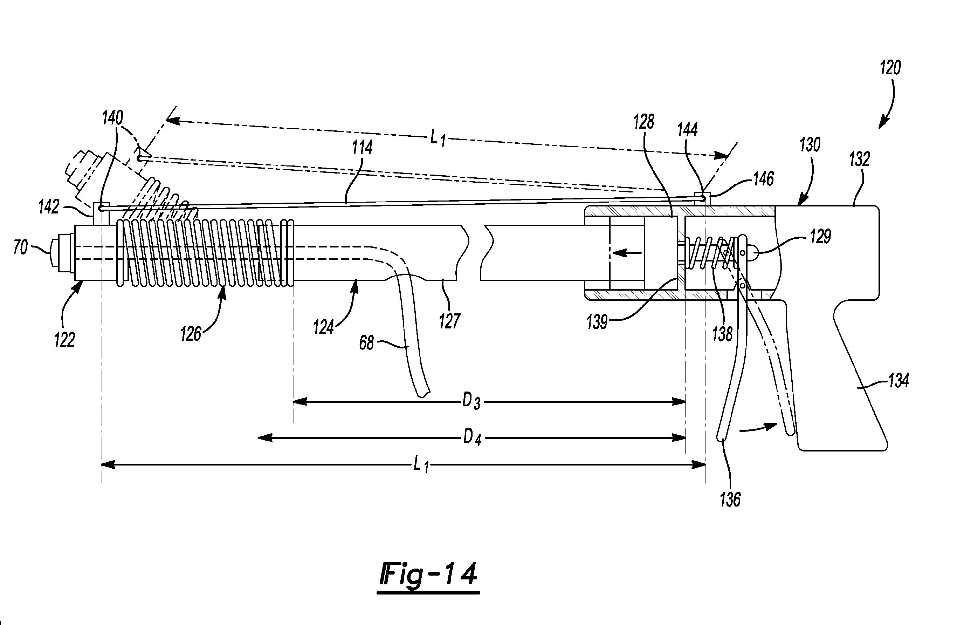

A camera manipulating device 120 according to the seventh embodiment of the present disclosure is shown in FIG. 14. The camera manipulating device 120 includes a first member 122, a second member 124, and a connecting member 126 disposed between the first member 122 and the second member 124, all of which are aligned in a generally collinear arrangement. The first member 122 defines a sleeve attached to the camera 70 so that the camera 70 can move with the first member 122. The connecting member 126 is flexible and can deflect, but it can be biased to a neutral position such that the first member 122 is collinear with the second member 124. It should be understood and appreciated that the connecting member 126 may be one of a universal joint, a coiled spring or any connection that can be biased to a neutral position and that can be moved, adjusted, deflected or the like upon the application of a force by the user. The cable 68 is attached to the camera 70 and can pass through the first member 122, the connecting member 126 and at least a portion of the second member 124.

The second member 124 includes a cylindrical portion 127, a shoulder stop 128, a connecting rod 129, and an adjustment mechanism 130. The adjusting mechanism 130 includes a housing 132, a handle 134, a trigger 136, and a biasing member 138. The connecting rod 129, the shoulder stop 128, and a portion of the cylindrical portion 127 are received in the housing 132. The connecting rod 129 is connected to the trigger 136. The biasing member 138, such as a coiled spring, is mounted over the connecting rod 129. The shoulder stop 128 abuts against an inner wall 139 of the housing 132 when the coiled spring 138 is in a neutral, non-biased position. The cable 68 attached to the camera 70 extends through the first member 122, the connecting member 126 and a portion of the cylindrical portion 127. A connecting line of a fixed length L₁, such as a cord 114 has a first end 140 that is connected to a tab portion 142 of the first member 122 and a second end 144 that is connected to the housing 132 of the length adjustment mechanism 130 at a corresponding tab portion 146. The biasing member 138 biases the shoulder stop 128 against the inner wall 139 of the housing 132 along the axis of the cylindrical portion 127 so that the shoulder stop 128 seats against the inner wall 139 of the housing 132 of the length adjustment mechanism 130. When the shoulder stop 128 abuts against the inner wall 139 of the housing 132, the cylindrical portion 127 and the shoulder stop 128 jointly extend a distance D₃ from the inner wall 139. The distance between the tab portions 142 and 146 are substantially equal to the length L₁ of the connecting line.

To manipulate the orientation of the camera 70, a user operates the length adjusting mechanism 130 by depressing the trigger 136. When the trigger 136 is depressed, the cylindrical portion 127 and the shoulder stop 128 are pushed away from the inner wall 139. The cylindrical portion 127 and the shoulder stop 128 jointly extend a distance D₄ (D₄>D₃) from the inner wall 139. In this state, a force is generated that acts along the connecting line. Since the connecting line has a fixed length L₁ and is not elastic, the force in the connecting line overcomes the bias of the connecting member 126 and draws the first member 122 and the camera 70 toward the housing 132. As a result, the longitudinal axis of the first member 122 is angled relative to the longitudinal axis of the cylindrical portion 127 of the second member 124. Once in a desired angular position, the camera 70 may also be rotated by the user by rotating the entire camera manipulating device 120.

When the user releases the trigger 136, the biasing member 138 returns to its neutral position, the cylindrical portion 127 and the shoulder stop 128 is moved toward the inner wall 139 of the housing 132 and the first member 122 is biases back to collinear alignment with the second member 124 by the bias of the connecting member 126.

This description is merely exemplary in nature and, thus, variations that do not depart from the gist of the disclosure are intended to be included within the scope of the disclosure. Further areas of applicability of the present invention will become apparent from the detailed description provided hereinafter. It should be understood that the description and specific examples, while indicating the preferred embodiment(s) of the invention, are intended for purposes of illustration only and are not intended to limit the scope of this disclosure.

## Claims

1. A camera manipulating device (30; 50; 72; 80; 92; 100; 120) for a camera (28; 70) attached to a cable (24; 68), comprising:
a first member (40; 74; 94; 102; 122) attached to the camera (28; 70) so that the camera (28; 70) moves with the first member (40; 74; 94; 102; 122); and
a second member (42; 76; 96; 104; 124) rotatably mounted over the cable (24; 68), wherein a first angle of the camera (28; 70) relative to the second member (42; 76; 96; 104; 124) is defined by an angle of the first member (40; 74; 94; 102; 122) relative to a longitudinal axis of the second member (42; 76; 96; 104; 124) in a first plane.

2. The camera manipulating device of Claim 1 wherein a second angle of the camera in a second plane is adjusted when the second member is rotated around the cable, wherein the second plane is perpendicular to the first plane.

3. The camera manipulating device of Claim 2, wherein the second plane is perpendicular to the longitudinal axis of the second member.

4. The camera manipulating device of Claim 3, wherein the camera is movable along the second plane to define a circular contour and the camera maintains an upright position.

5. The camera manipulating device of Claim 1, wherein the first member is a first sleeve secured over the camera and the second member is a second sleeve rotatably mounted over the cable.

6. The camera manipulating device of Claim 1, further comprising a connecting member (44; 52; 78; 81; 98; 106; 126) disposed between the first member and the second member.

7. The camera manipulating device of Claim 6, wherein the connecting member is selected from a group consisting of a universal joint, a flexible joint, a coiled spring, a set of pipe joints.

8. The camera manipulating device of Claim 7, wherein the set of pipe joints define different angles.

9. The camera manipulating device of Claim 8, wherein the first angle is adjusted by choosing a pipe joint with a desired angle.

10. The camera manipulating device of Claim 9, wherein the first member, the second member, and the connecting member define a bent pipe.

11. The camera manipulating device of Claim 7 wherein the first angle is adjusted by moving the connecting member to a desired angle.

12. The camera manipulating device of Claim 1, further comprising a manipulating member (46; 82; 114) attached to the first member for remotely adjusting the first angle.

13. The camera manipulating device of Claim 1 wherein the first member comprises a first sleeve secured over the camera, the second member comprises a second sleeve rotatably mounted over the cable; and
further comprising a connecting member connected between the first sleeve and the second sleeve, the connecting member being selected from one of a universal joint, a flexible joint, a coiled spring, and a set of pipe joints;
wherein the first angle of the camera is adjusted by changing the angle of the first sleeve relative to the second sleeve in a first plane, and a second angle of the camera in a second plane is adjusted by rotating the second sleeve around the cable;
wherein the camera defines a circular contour in the second plane and remains in an upright position when the second sleeve is rotated; and
wherein the second plane is perpendicular to the first plane and a longitudinal axis of the second sleeve.

14. The camera manipulating device of Claim 13 further comprising a manipulating member attached to the first sleeve for remotely moving the first sleeve in the first plane.
